# FASCICULE DE BREVET EUROPEEN

(11) **EP 4 090 833 B1**
(45) Date de publication et mention de la délivrance du brevet: **28.02.2024**
(21) Numéro de dépôt: 21705581.3
(22) Date de dépôt: 06.01.2021
(51) Int. Cl.: F01D 5/02, F02K 3/06, F01D 5/06, F04D 29/054, F04D 29/26

(54) **ENSEMBLE POUR UNE TURBOMACHINE**
ANORDNUNG FÜR EINEN TURBINENMOTOR
ASSEMBLY FOR A TURBINE ENGINE

(30) Priorité: 13.01.2020 FR 2000259
(43) Date de publication de la demande: 23.11.2022
(73) Titulaire: SAFRAN AIRCRAFT ENGINES, 75015 Paris (FR)
(72) Inventeur: JOLY, Philippe, Gérard, Edmond, 77550 MOISSY-CRAMAYEL (FR); PERROLLAZ, Jean-Marc, Claude, 77550 MOISSY CRAMAYEL (FR); JABLONSKI, Laurent, 77550 MOISSY-CRAMAYEL (FR)
(74) Mandataire: Ernest Gutmann - Yves Plasseraud S.A.S.
(86) Numéro de dépôt international: PCT/FR2021/050010
(87) Numéro de publication internationale: WO 2021/144519

(56) Documents cités:
- EP-A1- 3 514 325
- WO-A1-00/46489
- FR-A1- 3 066 552

## Description

### Domaine technique de l'invention

L'invention concerne un ensemble pour une turbomachine, telle notamment qu'un turboréacteur ou un turbopropulseur d'avion.

### Etat de la technique antérieure

Une turbomachine comporte classiquement, d'amont en aval par rapport au sens de circulation des gaz au sein de la turbomachine, une soufflante, un compresseur basse pression, un compresseur haute pression, une chambre de combustion, une turbine haute pression, une turbine basse pression, et une tuyère d'échappement.

Le rotor de la turbine haute pression et le rotor du compresseur haute pression sont couplés en rotation par l'intermédiaire d'un premier arbre de manière à former un corps haute pression.

Le rotor de la turbine basse pression et le rotor du compresseur basse pression sont couplés en rotation par l'intermédiaire d'un second arbre de manière à former un corps basse pression, la soufflante pouvant être reliée directement au rotor du compresseur basse pression ou bien par l'intermédiaire d'un train d'engrenage épicycloïdal par exemple.

Le document FR 3 066 552 au nom de la Demanderesse divulgue un ensemble pour une turbomachine s'étendant selon un axe, comportant un stator, un arbre du compresseur basse pression, un compresseur basse pression comportant un rotor comprenant un tambour couplé en rotation à l'arbre du compresseur basse pression et une soufflante comportant un disque couplé en rotation à l'arbre du compresseur basse pression.

La structure présentée dans ce document est relativement compacte mais nécessite notamment le démontage de l'ensemble du rotor du compresseur basse pression afin d'accéder à d'éventuels éléments situés autour de l'arbre du compresseur basse pression et situés en aval du tambour. Une telle structure ne permet par ailleurs pas de maintenir efficacement le tambour en cas de démontage du disque de soufflante.

L'invention vise à remédier à ces inconvénients de façon simple, fiable et peu onéreuse.

### Présentation de l'invention

A cet effet, l'invention concerne un ensemble pour une turbomachine s'étendant selon un axe, comportant un stator, un arbre de compresseur basse pression, un compresseur basse pression comportant un rotor comprenant un tambour couplé en rotation à l'arbre du compresseur basse pression, une soufflante comportant un disque couplé en rotation à l'arbre du compresseur basse pression, caractérisé en ce que le tambour comporte une partie radialement interne couplée en rotation à l'arbre du compresseur basse pression et une partie radialement externe fixée à la partie radialement interne par l'intermédiaire de moyens de fixation amovibles, des premiers moyens de maintien axial aptes à maintenir axialement et de façon amovible le disque de soufflante par rapport à l'arbre du compresseur basse pression, des seconds moyens de maintien axial aptes à maintenir axialement et de façon amovible la partie radialement interne du tambour par rapport à l'arbre du compresseur basse pression, les premiers moyens de maintien axial comportant une première butée apte à empêcher le déplacement du disque de soufflante par rapport à l'arbre du compresseur basse pression dans une première direction et un premier écrou apte à former une seconde butée amovible conçue pour empêcher le déplacement du disque de soufflante par rapport à l'arbre du compresseur basse pression, dans une seconde direction, opposée à la première direction.

Les termes axial, radial et circonférentiel sont définis par rapport à l'axe de la turbomachine, qui est confondu avec l'axe de l'arbre du compresseur basse pression notamment.

Un tel ensemble permet de pouvoir démonter aisément le disque de soufflante et la partie interne du tambour du compresseur basse pression, pour autoriser un accès depuis l'amont de la turbomachine, à d'éventuels éléments situés en aval du tambour et du disque de soufflante, lors d'une éventuelle opération de maintenance, sans nécessiter de démontage de la partie externe du tambour.

Pour cela, il suffit de retirer les premiers et seconds moyens de maintien axial amovibles de façon à autoriser le démontage du disque de soufflante et de la partie interne du tambour du compresseur basse pression.

Lors d'un tel démontage, la partie externe du tambour peut être maintenue à l'aide d'un outillage adapté.

Une telle structure peut également permettre le démontage du seul disque de soufflante tout en assurant le maintien en position du tambour, par l'intermédiaire des seconds moyens de maintien axial.

Le tambour du compresseur basse pression peut être situé en aval du disque de soufflante. Les termes amont et aval sont définis par rapport au sens de circulation des gaz au sein de la turbomachine.

Les moyens de fixation amovibles entre les parties interne et externe du tambour peuvent comporter au moins un boulon, par exemple plusieurs boulons régulièrement répartis sur la circonférence.

La partie interne du tambour peut comporter une partie annulaire radiale fixée à une partie annulaire radiale de la partie externe du tambour, par l'intermédiaire des moyens de fixation amovibles.

Les moyens de couplage en rotation du disque de la soufflante par rapport à l'arbre du compresseur basse pression peuvent comporter des cannelures.

Le disque de soufflante peut comporter une zone cylindrique comportant des cannelures coopérant avec des cannelures complémentaires d'une zone cylindrique de l'arbre du compresseur basse pression.

Lesdites cannelures peuvent s'étendre axialement. Lesdites cannelures peuvent autoriser un montage et un démontage axial du disque de soufflante par rapport à l'arbre du compresseur basse pression.

Les moyens de couplage en rotation de la partie interne du tambour par rapport à l'arbre du compresseur basse pression peuvent comporter des cannelures.

La partie interne du tambour peut comporter une zone cylindrique comportant des cannelures coopérant avec des cannelures complémentaires d'une zone cylindrique de l'arbre du compresseur basse pression.

Lesdites cannelures peuvent s'étendre axialement. Lesdites cannelures peuvent autoriser un montage et un démontage axial de la partie interne du tambour par rapport à l'arbre du compresseur basse pression.

Les zones cylindriques équipées de cannelures de l'arbre du compresseur basse pression, de la partie interne du tambour et du disque de soufflante peuvent être situées, au moins partiellement, dans un même plan radial.

Une telle caractéristique permet notamment d'éviter de contraindre en compression les cannelures lors de la mise en place des moyens de maintien axial.

L'arbre du compresseur basse pression peut comporter des cannelures radialement internes, coopérant avec des cannelures complémentaires du disque de soufflante.

L'arbre du compresseur basse pression peut comporter des cannelures radialement externes, coopérant avec des cannelures complémentaires de la partie interne du tambour. Les moyens de couplage en rotation de la partie interne du tambour par rapport à l'arbre du compresseur basse pression peuvent comporter des dents s'étendant dans un plan radial. La partie interne du tambour peut comporter une zone annulaire s'étendant radialement comportant des dents coopérant avec des dents complémentaires d'une zone annulaire radiale de l'arbre du compresseur basse pression.

Les dents peuvent être rectilignes ou courbes.

Lesdites dents peuvent autoriser un montage et un démontage axial de la partie interne du tambour par rapport à l'arbre du compresseur basse pression.

Les dents peuvent être formées au niveau d'une extrémité aval de la partie interne du tambour et au niveau d'une extrémité amont de l'arbre du compresseur basse pression.

Les dents peuvent être formées dans une zone située en amont des cannelures permettant le couplage en rotation de l'arbre du compresseur basse pression et du disque de soufflante.

La première butée peut être formée par un épaulement radial ménagé dans l'arbre du compresseur basse pression, le disque de soufflante venant axialement en appui sur ledit épaulement radial. L'extrémité aval du disque de soufflante peut venir axialement en appui sur ledit épaulement.

Le premier écrou peut comporter une partie venant en appui axial sur le disque de soufflante et une partie vissée sur l'arbre du compresseur basse pression, ou inversement.

Les premiers moyens de maintien axial peuvent comporter des moyens d'anti-rotation empêchant la rotation de l'écrou dans le sens de son dévissage. Les moyens d'anti-rotation peuvent se présenter sous la forme d'une bague comportant une partie couplée en rotation à l'écrou et une partie couplée en rotation à un élément fixe par rapport à l'écrou, par exemple couplée en rotation au disque de soufflante. La bague peut être maintenue axialement par l'intermédiaire d'un anneau élastique, engagé par exemple dans une gorge de l'élément fixe. Les seconds moyens de maintien axial peuvent comporter une seconde butée apte à empêcher le déplacement de la partie interne du tambour par rapport à l'arbre du compresseur basse pression dans une première direction et un second écrou apte à former une seconde butée amovible apte à empêcher le déplacement de la partie interne du tambour par rapport à l'arbre du compresseur basse pression, dans une seconde direction, opposée à la première direction.

La seconde butée peut être formée par un épaulement radial ménagé dans l'arbre du compresseur basse pression, la partie interne du tambour venant axialement en appui sur ledit épaulement radial. L'extrémité aval de la partie interne du tambour peut venir axialement en appui sur ledit épaulement.

La seconde butée peut être formée par appui axial des zones radiales comportant les dents de couplage entre la partie interne du tambour et l'arbre du compresseur basse pression.

Le premier écrou peut comporter une partie venant en appui axial sur le disque de soufflante et une partie vissée sur l'arbre du compresseur basse pression, ou inversement. L'ensemble peut comporter des moyens d'étanchéité dynamiques entre le stator et l'arbre du compresseur basse pression, situés en aval de la partie interne du tambour et du disque de soufflante.

De tels moyens d'étanchéité peuvent être aptes à délimiter l'amont d'une enceinte d'huile de la turbomachine.

La structure selon l'invention permet d'accéder aisément auxdits moyens d'étanchéité depuis l'amont de la turbomachine, par retrait de la partie interne du tambour et du disque de soufflante.

La soufflante peut comporter un disque aubagé monobloc. Un disque aubagé monobloc, ou DAM, est un ensemble comportant un disque et des aubes s'étendant depuis le disque et formées d'une seule pièce avec le disque.

Dans tel cas, en cas d'endommagement de l'une des aubes, il est nécessaire de démonter et changer l'ensemble du disque aubagé monobloc. Il est donc particulièrement utile qu'un démontage d'un tel ensemble puisse être réalisé aisément.

L'invention concerne également une turbomachine comportant au moins un ensemble du type précité.

La turbomachine peut être un turboréacteur ou un turbopropulseur d'avion.

L'invention concerne également un aéronef comportant au moins une turbomachine du type précité.

### Brève description des figures

[Fig. 1] est une demie-vue en coupe axiale d'une partie d'un ensemble selon une première forme de réalisation de l'invention,
[Fig. 2] est une demie-vue en coupe axiale d'une partie d'un ensemble selon une deuxième forme de réalisation de l'invention,
[Fig. 3] est une vue partiellement éclatée de l'ensemble de la figure 2,
[Fig. 4] est une vue éclatée de l'ensemble de la figure 2.

### Description détaillée de l'invention

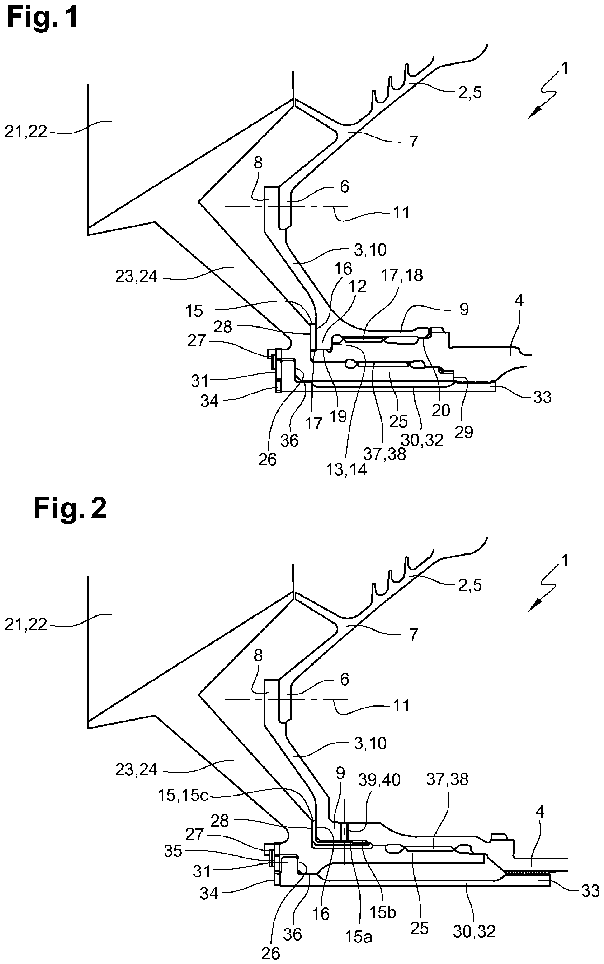

La figure 1 illustre un ensemble pour une turbomachine selon une première forme de réalisation de l'invention. Celui-ci comporte un compresseur basse pression comprenant un rotor comprenant un tambour 2 couplé en rotation à un arbre du compresseur basse pression.

Le tambour 2 comporte une partie radialement interne 3 couplée en rotation à un arbre 4 du compresseur basse pression et une partie radialement externe 5.

La partie radialement externe 5 comporte une zone radialement interne 6 de forme annulaire et s'étendant radialement, et une zone tronconique 7 s'étendant depuis la zone interne 6 en s'évasant vers l'aval, c'est-à-dire vers la droite aux figures.

La partie interne 3 comporte une zone radialement externe 8 de forme annulaire s'étendant radialement, une zone radialement interne 9 de forme cylindrique et une zone médiane 10 reliant les zones interne et externe, ici de forme tronconique.

Les zones annulaires radiales 6, 8 sont fixées l'une à l'autre par l'intermédiaire de moyens de fixation amovibles, par exemple par l'intermédiaire de boulons 11 (illustrés schématiquement à la figure 1 par des traits mixtes) régulièrement répartis sur la circonférence.

La zone cylindrique interne 9 comporte un rebord 12 s'étendant radialement vers l'intérieur depuis l'extrémité amont de la zone cylindrique 9, ledit rebord 12 formant un épaulement annulaire 13 apte à venir en appui axial sur un épaulement annulaire complémentaire 14 de l'arbre du compresseur basse pression 4.

Ledit appui axial est maintenu par l'intermédiaire d'un écrou 15 venant se plaquer axialement sur ledit rebord 12, en particulier sur la face radiale amont 16 dudit rebord 12 et vissé sur une zone filetée 17 de l'extrémité amont de l'arbre 4.

La surface radialement interne de la zone cylindrique 9 comporte en outre des cannelures axiales 17 s'étendant en aval de l'épaulement, coopérant avec des cannelures complémentaires 18 ménagées au niveau de la surface radialement externe de l'arbre 4.

La surface radialement interne du rebord 12 et la surface radialement interne de l'extrémité aval de la zone cylindrique forment des portées cylindriques 19, 20 coopérant avec des portées cylindriques complémentaires de l'arbre 4, lesdites portées 19, 20 étant aptes à assurer un centrage de la partie interne 3 du tambour 2 sur ledit arbre 4.

L'ensemble 1 comporte en outre une soufflante 21 comprenant des aubes 22 solidaires d'un disque 23 (disque aubagé monobloc), le disque 23 étant couplé en rotation à l'arbre 4 de compresseur basse pression.

Le disque 23 comporte une partie tronconique 24 se rétrécissant vers l'aval et prolongée à l'aval par une partie cylindrique 25.

L'extrémité amont de la partie cylindrique 25 comporte un renfoncement annulaire débouchant radialement vers l'intérieur et délimitant un épaulement annulaire 26. Une gorge 27 est formée dans la surface radialement interne de la partie cylindrique 25, en amont dudit épaulement 26.

Un épaulement radialement externe 28 est par ailleurs formé entre la zone tronconique 24 et la zone cylindrique 25 du disque 23. L'écrou 15 est intercalé axialement entre ledit épaulement 28 externe et la face radiale amont 16 du rebord 12.

L'épaulement 28 vient axialement en appui sur l'écrou 15. En variante, l'extrémité aval de la partie cylindrique 25 du disque 23 vient axialement en appui sur un épaulement annulaire radialement interne 29 de l'arbre 4.

Un tel appui est maintenu par l'intermédiaire d'un écrou 30 comportant un rebord radial amont 31 venant en appui sur l'épaulement 26 et une partie cylindrique 32 dont l'extrémité aval 33 est filetée et coopère avec un taraudage de la surface radialement interne de l'arbre 4, situé en aval de l'épaulement 26.

L'écrou 30 est maintenu en position par l'intermédiaire d'une bague 34 couplée en rotation audit écrou 30, par exemple par l'intermédiaire d'un système de doigt et d'encoche, ladite bague 34 étant également couplée en rotation au disque de soufflante 23, par exemple par l'intermédiaire d'un système de doigt et d'encoche.

La bague 34 est maintenue axialement en position par l'intermédiaire d'un anneau élastique 35 ou circlips, engagé dans la gorge 27.

L'écrou 30 et la partie cylindrique du disque 25 comportent par ailleurs des portées cylindriques complémentaires 36 facilitant le centrage de l'écrou 30, et situées en aval du rebord amont 31.

La partie cylindrique 25 du disque 23 comporte de plus des cannelures axiales 37, formées au niveau de la surface radialement externe de ladite partie cylindrique 25, coopérant avec des cannelures complémentaires 38 ménagées au niveau de la surface radialement interne de l'arbre 4.

Les cannelures 17, 18 et 37, 38 sont situées sur un même plan radial, au moins en partie.

Les figures 2 à 4 illustrent un ensemble selon une deuxième forme de réalisation de l'invention, qui diffère de celui exposé en référence à la figure 1 en ce que la partie interne 3 du tambour 2 est couplée en rotation à l'arbre 4 par l'intermédiaire de dents 39, 40 formées respectivement au niveau de la surface annulaire radiale de l'extrémité aval de la partie interne 3 du tambour 2 et au niveau de la surface annulaire radiale de l'extrémité amont de l'arbre 4.

Les dents 39, 40 peuvent s'étendre axialement, soit de façon rectiligne, soit de façon courbe. Dans cette forme de réalisation, l'écrou 15 comporte une partie cylindrique 15a dont l'extrémité aval est filetée 15b et est vissée sur un taraudage de l'arbre 4. L'écrou 15 comporte par ailleurs un rebord 15c s'étendant radialement depuis l'extrémité amont de la partie cylindrique 15a, ledit rebord 15c prenant appui sur la face radiale 16 ou sur un épaulement radial de la partie interne 3 du tambour 2.

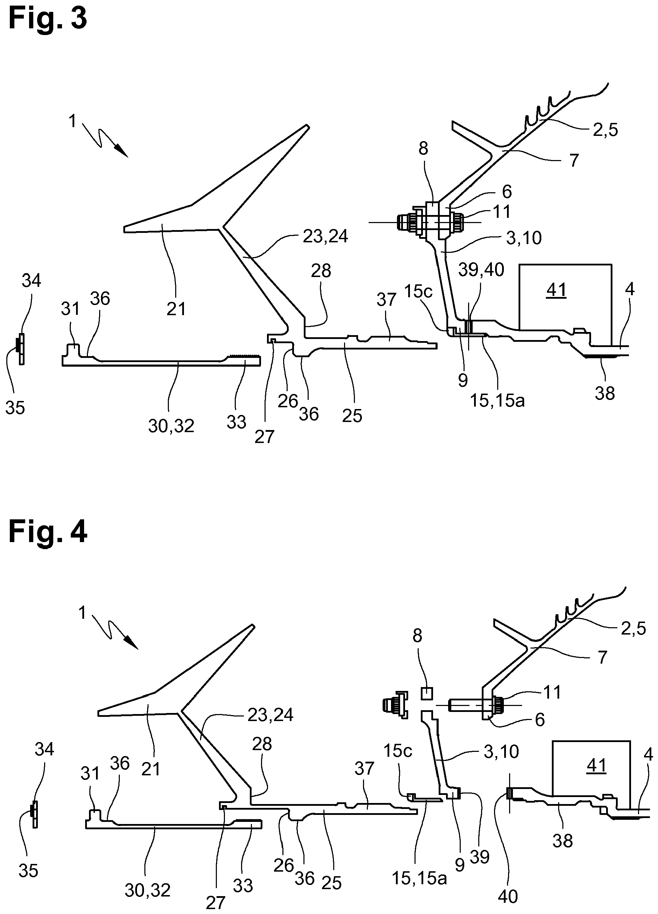

Un tel ensemble 1 permet de pouvoir démonter aisément le disque de soufflante 23 et la partie interne 3 du tambour 2 par rapport à l'arbre 4 du compresseur basse pression, pour autoriser un accès depuis l'amont de la turbomachine, à d'éventuels éléments situés en aval du tambour et du disque de soufflante, lors d'une éventuelle opération de maintenance, sans nécessiter de démontage de la partie externe 5 du tambour 2. De tels éléments sont par exemple des moyens d'étanchéité dynamiques 41 entre un stator de l'ensemble et l'arbre 4 du compresseur basse pression, situés en aval de la partie interne 3 du tambour 2 et du disque de soufflante 23. De tels moyens d'étanchéité 41 sont illustrés schématiquement aux figures 3 et 4. De tels moyens d'étanchéité 41 peuvent être aptes à délimiter l'amont d'une enceinte d'huile de la turbomachine.

Afin de permettre un tel accès, il suffit de retirer les écrous 15, 30 et les boulons 11 de façon à autoriser le démontage du disque de soufflante 23 et de la partie interne 3 du tambour 2 par rapport à l'arbre 4, par translation selon l'axe X.

La structure selon l'invention permet alors d'accéder aisément aux moyens d'étanchéité 41 depuis l'amont de la turbomachine, par retrait de la partie interne 3 du tambour 2 et du disque de soufflante 23.

Lors d'un tel démontage, la partie externe 5 du tambour 2 peut être maintenue à l'aide d'un outillage adapté.

Une telle structure peut également permettre le démontage du seul disque de soufflante 23 tout en assurant le maintien en position du tambour 2, par l'intermédiaire de l'écrou 15.

## Revendications

1. Ensemble (1) pour une turbomachine s'étendant selon un axe, comportant un stator, un arbre (4) de compresseur basse pression, un compresseur basse pression comportant un rotor comprenant un tambour (2) couplé en rotation à l'arbre (4) du compresseur basse pression, une soufflante (21) comportant un disque (23) couplé en rotation à l'arbre (4) du compresseur basse pression, **caractérisé en ce que** le tambour (2) comporte une partie radialement interne (3) couplée en rotation à l'arbre (4) du compresseur basse pression et une partie radialement externe (5) fixée à la partie radialement interne (3) par l'intermédiaire de moyens de fixation amovibles (11), des premiers moyens de maintien axial (30) aptes à maintenir axialement et de façon amovible le disque (23) de soufflante (21) par rapport à l'arbre (4) du compresseur basse pression, des seconds moyens de maintien axial (15) aptes à maintenir axialement et de façon amovible la partie radialement interne (3) du tambour (2) par rapport à l'arbre (4) du compresseur basse pression, les premiers moyens de maintien axial (30) comportant une première butée (31, 26) apte à empêcher le déplacement du disque (23) de soufflante (21) par rapport à l'arbre (4) du compresseur basse pression dans une première direction et un premier écrou (30) apte à former une seconde butée amovible conçue pour empêcher le déplacement du disque (23) de soufflante (21) par rapport à l'arbre (4) du compresseur basse pression, dans une seconde direction, opposée à la première direction.

2. Ensemble (1) selon la revendication 1, **caractérisé en ce que** les moyens de couplage en rotation du disque (23) de la soufflante (21) par rapport à l'arbre (4) du compresseur basse pression comportent des cannelures (37, 38).

3. Ensemble (1) selon la revendication 1 ou 2, **caractérisé en ce que** les moyens de couplage en rotation de la partie interne (3) du tambour (2) par rapport à l'arbre (4) du compresseur basse pression comportent des cannelures (17, 18).

4. Ensemble (1) selon la revendication 1 ou 2, **caractérisé en ce que** les moyens de couplage en rotation de la partie interne (3) du tambour (2) par rapport à l'arbre (4) du compresseur basse pression comportent des dents (39, 40) s'étendant dans un plan radial.

5. Ensemble (1) selon l'une des revendications 1 à 4, **caractérisé en ce que** les seconds moyens de maintien axial (15) comportent une seconde butée (13, 14) apte à empêcher le déplacement de la partie interne (3) du tambour (2) par rapport à l'arbre (4) du compresseur basse pression dans une première direction et un second écrou (15) apte à former une seconde butée amovible apte à empêcher le déplacement de la partie interne (3) du tambour (2) par rapport à l'arbre (4) du compresseur basse pression, dans une seconde direction, opposée à la première direction.

6. Ensemble (1) selon l'une des revendications 1 à 5, **caractérisé en ce qu'**il comporte des moyens d'étanchéité dynamiques (41) entre le stator et l'arbre (4) du compresseur basse pression, situés en aval de la partie interne (3) du tambour (2) et du disque (23) de soufflante (21).

7. Ensemble (1) selon l'une des revendications 1 à 6, **caractérisé en ce que** la soufflante (21) comporte un disque aubagé monobloc.

8. Turbomachine comportant au moins un ensemble (1) selon l'une des revendications 1 à 7.

9. Aéronef comportant au moins une turbomachine selon la revendication 8.

## Patentansprüche

1. Anordnung (1) für ein Turbotriebwerk, die sich entlang einer Achse erstreckt, enthaltend einen Stator, eine Niederdruckverdichterwelle (4), einen Niederdruckverdichter mit einem Rotor, der eine Trommel (2) umfasst, die drehbar mit der Niederdruckverdichterwelle (4) gekoppelt ist, ein Gebläse (21) mit einer Scheibe (23), die drehbar mit der Niederdruckverdichterwelle (4) gekoppelt ist,
**dadurch gekennzeichnet, dass** die Trommel (2) einen radial inneren Abschnitt (3), der drehbar mit der Niederdruckverdichterwelle (4) gekoppelt ist, und einen radial äußeren Abschnitt (5) aufweist, der über lösbare Befestigungsmittel (11) an dem radial inneren Abschnitt (3) befestigt ist, sowie erste Axialhaltemittel (30), die geeignet sind, die Scheibe (23) des Gebläses (21) axial und lösbar in Bezug auf die Niederdruckverdichterwelle (4) zu halten, zweite Axialhaltemittel (15), die geeignet sind, den radial inneren Abschnitt (3) der Trommel (2) axial und lösbar in Bezug auf die Niederdruckverdichterwelle (4) zu halten, wobei die ersten Axialhaltemittel (30) einen ersten Anschlag (31, 26), der geeignet ist, die Verlagerung der Scheibe (23) des Gebläses (21) relativ zur Niederdruckverdichterwelle (4) in einer ersten Richtung zu verhindern, und eine erste Mutter (30) aufweisen, die geeignet ist, einen zweiten lösbaren Anschlag zu bilden, der dazu ausgelegt ist, die Verlagerung der Scheibe (23) des Gebläses (21) relativ zur Niederdruckverdichterwelle (4) in einer zweiten Richtung, die der ersten Richtung entgegengesetzt ist, zu verhindern.

2. Anordnung (1) nach Anspruch 1,
**dadurch gekennzeichnet, dass** die Mittel zur Drehkopplung der Scheibe (23) des Gebläses (21) in Bezug auf die Niederdruckverdichterwelle (4) Rillen (37, 38) aufweisen.

3. Anordnung (1) nach Anspruch 1 oder 2,
**dadurch gekennzeichnet, dass** die Mittel zur Drehkopplung des inneren Abschnitts (3) der Trommel (2) in Bezug auf die Niederdruckverdichterwelle (4) Rillen (17, 18) aufweisen.

4. Anordnung (1) nach Anspruch 1 oder 2,
**dadurch gekennzeichnet, dass** die Mittel zur Drehkopplung des inneren Abschnitts (3) der Trommel (2) in Bezug auf die Niederdruckverdichterwelle (4) Zähne (39, 40) aufweisen, die sich in einer radialen Ebene erstrecken.

5. Anordnung (1) nach einem der Ansprüche 1 bis 4,
**dadurch gekennzeichnet, dass** die zweiten Axialhaltemittel (15) einen zweiten Anschlag (13, 14), der geeignet ist, die Verlagerung des inneren Abschnitts (3) der Trommel (2) in Bezug auf die Niederdruckverdichterwelle (4) in einer ersten Richtung zu verhindern, und eine zweite Mutter (15) aufweisen, die geeignet ist, einen zweiten lösbaren Anschlag zu bilden, der geeignet ist, die Verlagerung des inneren Abschnitts (3) der Trommel (2) in Bezug auf die Niederdruckverdichterwelle (4) in einer zweiten Richtung, die der ersten Richtung entgegengesetzt ist, zu verhindern.

6. Anordnung (1) nach einem der Ansprüche 1 bis 5,
**dadurch gekennzeichnet, dass** sie dynamische Dichtungsmittel (41) zwischen dem Stator und der Niederdruckverdichterwelle (4) umfasst, die sich stromabwärts des inneren Abschnitts (3) der Trommel (2) und der Scheibe (23) des Gebläses (21) befinden.

7. Anordnung (1) nach einem der Ansprüche 1 bis 6,
**dadurch gekennzeichnet, dass** das Gebläse (21) eine einstückig ausgeführte Schaufelscheibe aufweist.

8. Turbotriebwerk mit zumindest einer Anordnung (1) nach einem der Ansprüche 1 bis 7.

9. Luftfahrzeug mit zumindest einem Turbotriebwerk nach Anspruch 8.

## Claims

1. Assembly (1) for a turbine engine extending along an axis, including a stator, a low-pressure compressor shaft (4), a low-pressure compressor including a rotor comprising a drum (2) coupled in rotation to the shaft (4) of the low-pressure compressor, a fan (21) including a disc (23) coupled in rotation to the shaft (4) of the low-pressure compressor, **characterised in that** the drum (2) includes a radially internal portion (3) coupled in rotation to the shaft (4) of the low-pressure compressor and a radially external portion (5) fixed to the radially internal portion (3) via removable fixing means (11), first axial retention means (30) capable of axially and removably retaining the fan (21) disc (23) with respect to the shaft (4) of the low-pressure compressor, second axial retention means (15) capable of axially and removably retaining the radially internal portion (3) of the drum (2) with respect to the shaft (4) of the low-pressure compressor, the first axial retention means (30) include a first stop (31, 26) capable of preventing the displacement of the fan (21) disc (23) with respect to the shaft (4) of the low-pressure compressor in a first direction and a first nut (30) capable of forming a second removable stop designed to prevent the displacement of the fan (21) disc (23) with respect to the shaft (4) of the low-pressure compressor, in a second direction, opposite the first direction.

2. Assembly (1) according to claim 1, **characterised in that** the means for coupling in rotation the disc (23) of the fan (21) with respect to the shaft (4) of the low-pressure compressor include splines (37, 38).

3. Assembly (1) according to claim 1 or 2, **characterised in that** the means for coupling in rotation the internal portion (3) of the drum (2) with respect to the shaft (4) of the low-pressure compressor include splines (17, 18).

4. Assembly (1) according to claim 1 or 2, **characterised in that** the means for coupling in rotation the internal portion (3) of the drum (2) with respect to the shaft (4) of the low-pressure compressor include teeth (39, 40) extending in a radial plane.

5. Assembly (1) according to one of claims 1 to 4, **characterised in that** the second axial retention means (15) include a second stop (13, 14) capable of preventing the displacement of the internal portion (3) of the drum (2) with respect to the shaft (4) of the low-pressure compressor in a first direction and a second nut (15) capable of forming a second removable stop capable of preventing the displacement of the internal portion (3) of the drum (2) with respect to the shaft (4) of the low-pressure compressor, in a second direction, opposite the first direction.

6. Assembly (1) according to one of claims 1 to 5, **characterised in that** it includes dynamic sealing means (41) between the stator and the shaft (4) of the low-pressure compressor, located downstream from the internal portion (3) of the drum (2) and of the fan (21) disc (23).

7. Assembly (1) according to one of claims 1 to 6, **characterised in that** the fan (21) includes a blisc.

8. Turbomachine including at least one assembly (1) according to one of claims 1 to 7.

9. Aircraft including at least one turbine engine according to claim 8.
